# EUROPEAN PATENT APPLICATION

(11) **EP 4 588 835 A1**
(43) Date of publication of application: **23.07.2025**
(21) Application number: 24153039.3
(22) Date of filing: 22.01.2024
(51) Int. Cl.: B65G 1/04, B65G 1/137

(54) **PICKING SYSTEM**

(71) Applicant: AUTOSTORE TECHNOLOGY AS, 5578 Nedre Vats (NO)
(72) Inventor: Hermansen, Jon, 5578 Nedre Vats (NO)
(74) Representative: Kilburn & Strode LLP

(57) **Abstract**

A picking system (600) for picking items (601) from storage containers (112) in an automated storage and retrieval system. The automated storage and retrieval system comprising a plurality of storage columns (102), and a rail system (116) above the storage columns (102), the rail system (116) having a first set of parallel rails (118a, 118b) arranged in a horizontal plane and extending in a first direction (X) and a second set of parallel rails (120a, 120b) arranged in the horizontal plane and extending in a second direction (Y) which is orthogonal to the first direction (X), the first and second sets of rails (118a, 118b, 120a, 120b) forming a grid pattern in the horizontal plane comprising a plurality of adjacent grid cells, each comprising a grid opening (124) corresponding with one of the storage columns (102) and being defined by a pair of neighbouring rails (118a, 118b) of the first set of rails and a pair of neighbouring rails (120a, 120b) of the second set of rails. The picking system (600) comprising a device body (604) that is configured to move above the storage columns (102), a picking device (602) configured to pick items from above the rail system (116) from storage containers (112) beneath grid openings (124) wherein the device body (604) has a footprint that corresponds to a plurality of grid openings (124).

## Description

### TECHNICAL FIELD

The disclosure relates to a picking system. More particularly, it relates to A picking system for picking items from storage containers in an automated storage and retrieval system, an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In such an automated storage and retrieval system, the container-handling vehicles may make numerous journeys to retrieve and deliver items to a packing station or port. With numerous journeys, the control of the system can be complex.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a picking system arranged on a rail system of an automated storage and retrieval system;
Fig. 6 shows a further view of the picking system of Fig. 5;
Fig. 7 shows a triangular rail protection element;
Fig. 8 shows a shallow triangular rail protection element;
Fig. 9 shows a semi-circular rail protection element;
Fig. 10 shows a circular rail protection element;
Fig. 11 shows a picking system with a camera;
Fig. 12 shows a picking system with an operator platform; and
Fig. 13 shows an example method of operating the picking system.

### DETAILED DESCRIPTION

In overview, the disclosure relates to a picking system for picking items from storage containers in an automated storage and retrieval system. The automated storage and retrieval system may comprise a plurality of storage columns, and a rail system above the storage columns, the rail system having a first set of parallel rails arranged in a horizontal plane and extending in a first direction and a second set of parallel rails arranged in the horizontal plane and extending in a second direction which is orthogonal to the first direction, the first and second sets of rails forming a grid pattern in the horizontal plane comprising a plurality of adjacent grid cells, each comprising a grid opening corresponding with one of the storage columns and being defined by a pair of neighbouring rails of the first set of rails and a pair of neighbouring rails of the second set of rails. The picking system comprised a device body that is configured to move above the storage columns, a picking device configured to pick items from above the rail system from storage containers beneath grid openings. The device body has a footprint that corresponds to a plurality of grid openings.

With the picking system or harvester of the present disclosure, items can be picked from multiple storage containers below the picking system, which can minimise the need to move the picking system.

### Automated storage and retrieval system overview

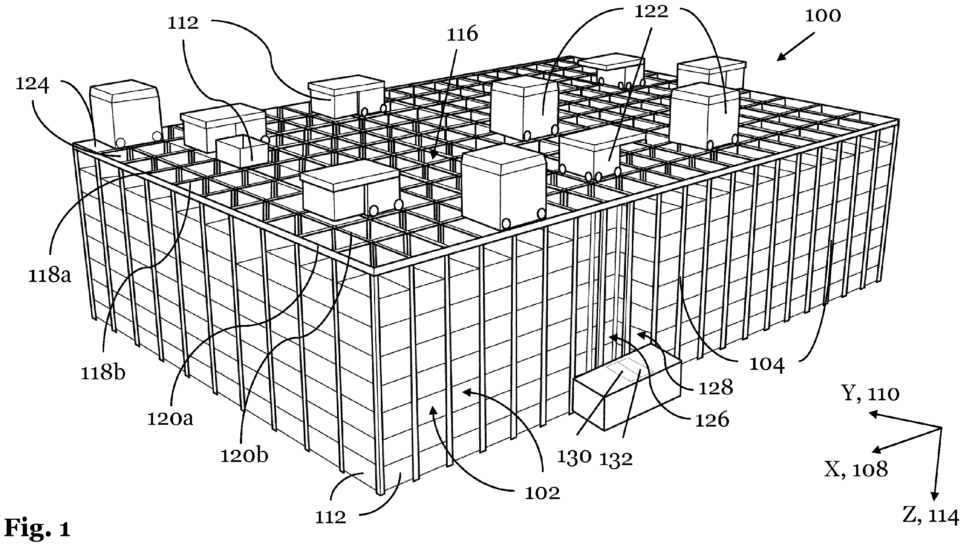

Referring to the embodiment shown in Fig. 1, a grid or framework structure 100 comprises a frame formed by a plurality of generally rectilinear, adjacent vertical columns or upright members 102 formed between vertical frame members 104 and extending in the X and Y directions 108, 110. The grid elements may be fabricated of any appropriate material; for example, the frame members maybe formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 maybe transported to a port of another grid on the same or another level, or to an external facility. Transport of bins 112 to and from ports 130, 132 may be by any appropriate means (not shown) including conveyors, transport vehicles, lifts or robots.

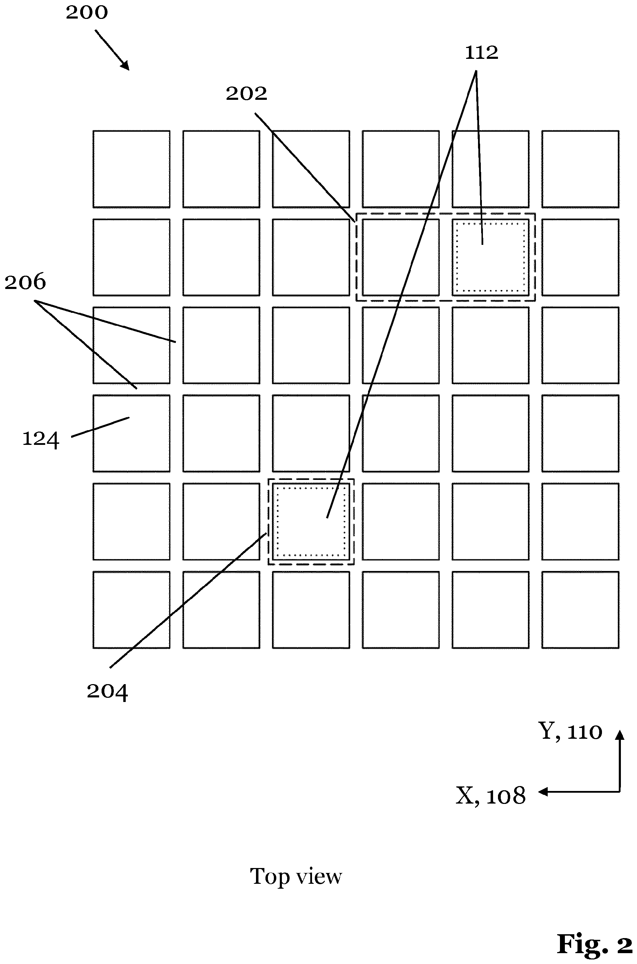

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

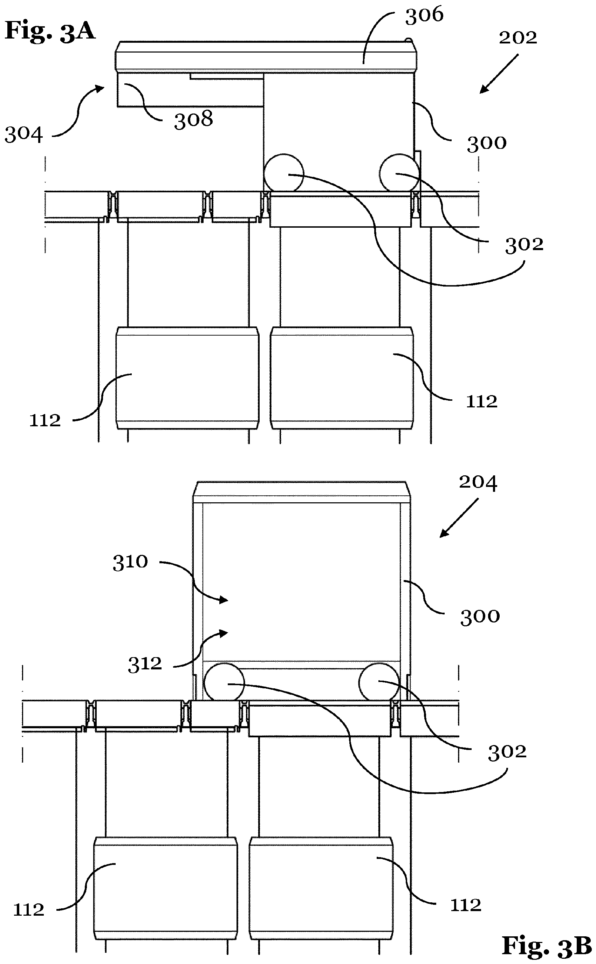

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

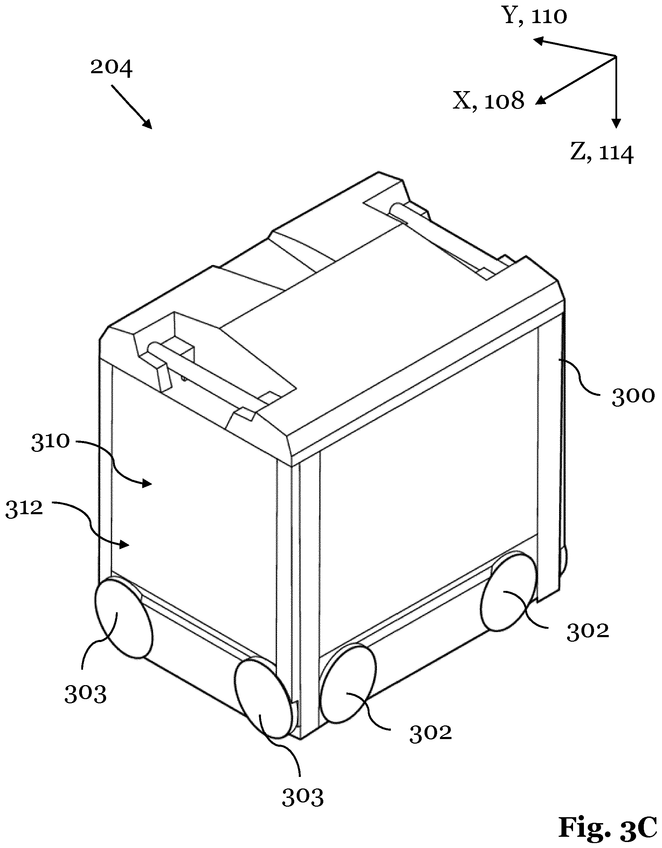

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

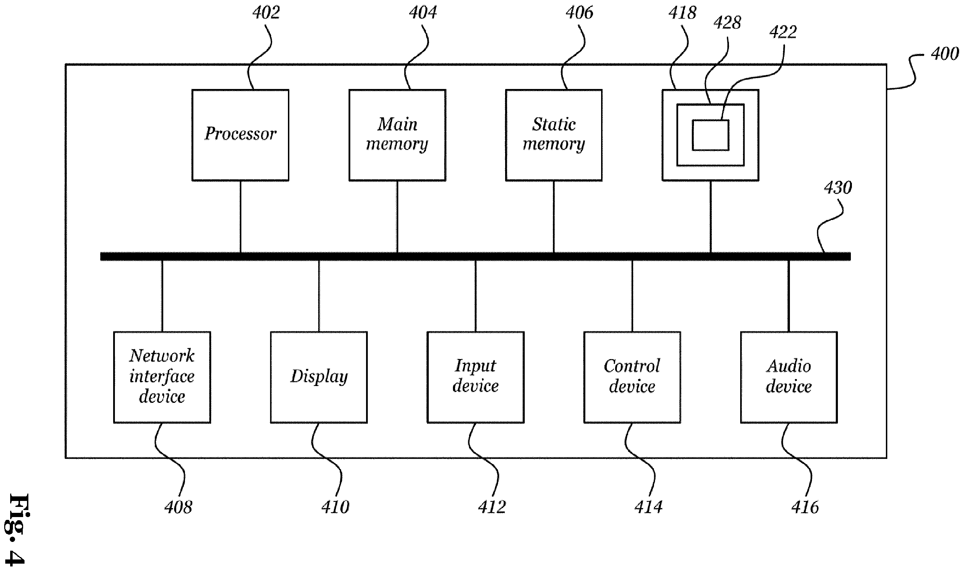

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target/order or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port columns 126, 128, gripped and lifted by a robot 202, 204 and delivered to the desired storage cell, bins above the desired position being repositioned if necessary as discussed above.

### Picking System

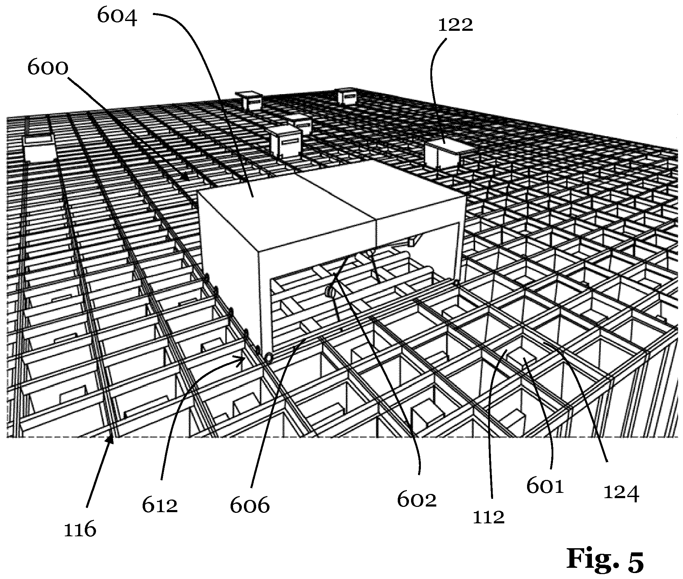

Fig. 5 shows a picking system 600 which may also be known as bin harvester for picking items 601 from storage containers 124 in an automated storage and retrieval system as described in relation to Figs. 1 to 4. The picking system 600 sits atop the rail system 116 over a plurality of storage containers 112. The picking system may be provided with a wheel arrangement 612 with wheels arranged to allow the picking system to move on the rail system above the storage columns 102, such as in perpendicular directions on the rail system 116. A drive system and corresponding control system may be provided in order for the automated storage and retrieval system to control movement of the picking system 600 to a desired section of the grid.

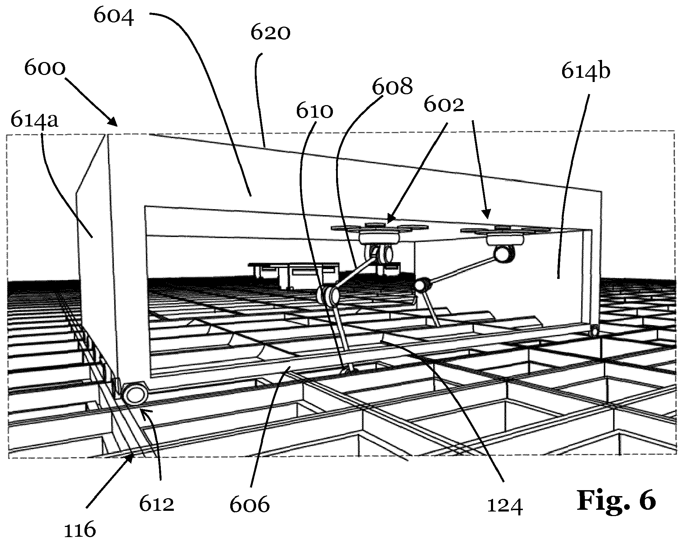

The picking system 600 may have a device body 604 with two upright parallel side wall elements 614a, 614b and a horizontal bridge element 620 atop the two upright wall elements 614a, 614b (see Fig. 6). Although shown with open sides, further vertical side walls may be provided between the side wall elements 614a, 614b to enclose the space under the bridge element 620.

Below the bridge element 620, one or more picking devices 602, for example in the form of a robotic arm, may be provided for picking items 601 from containers 112.

The picking system may have a footprint that corresponds or extends to a plurality of grid openings such that the picking system 600 may extend over a plurality of grid openings 124 and pick or select items from storage containers within the grid openings under the picking system. The picking system may have a footprint which corresponds to a matrix of grid openings 124, the matrix having a first dimension of at least 1 and a second dimension of at least 2. The footprint may extend to a whole number of grid openings. In the example, the picking system 600 extends over an array or grid of sixteen openings 124 below which storage containers 124 may be stacked. It will be understood that the picking system 600 could be of any size depending on the application.

While the picking system 600 is preferably used to pick items 601 from a top layer of storage containers 112 directly below the rail system 116, picking devices 602 may be used that can reach into storage containers below this top layer.

The picking system 600 may be used in conjunction with robots 122. Such robots have been described in relation to Figs. 1 to 4.

Fig. 6 shows a further view of the picking system 600 in which two picking devices 602 are provided. These picking devices 602 may be attached to the underside of the bridge element 620. Each picking device 602 may have a picking arm 608. The picking arm 608 may be articulated to allow for the arm to move to different openings 124 under the picking system 600. At the distal end of the picking arm 608 a picking head 610 may be provided. This picking head 610 maybe a mechanical grabber or claw or suction device or any other suitable device in order to pick up items from a container 112. Although only two picking devices 602 are shown, addition picking devices 602, possibly with different picking heads 610 may be provided. At least one picking device 602 may be provided for each row of storage containers 112 above which the picking system 600 is positioned.

Fig. 6 shows more detail of the wheel arrangement 612. In the example, the wheel arrangement 612 comprises a plurality of wheels along each of the upright walls 614a, 614b and wheels aligned perpendicularly to those under the upright walls 614a, 614b in each corner.

In the example, the footprint of the picking system 600 corresponds with a whole number of grid openings 124. In the example, the device body 604 extends over one rail width around its perimeter such that robots 122 may pass over adjacent grid openings.

The wall elements 614a, 614b are dimensioned so as not to protrude or to protrude as little as possible over a grid opening 124 beneath the device body 604 such that as near full access to the opening 124 is provided.

Rail protection elements 606 are provided which overlay the rails of the rail system 116 beneath the picking system 600. These rail protection elements 606 may form a grid or lattice which corresponds with the grid over which the picking system sits during operation. The rail protection elements 606 may, at their widest point, be slightly wider than the rail system 116 over which they lie.

In operation, the picking system 600 may move over a desired portion or subsection of the grid of the automated storage and retrieval system. The picking device or devices 602 are then controlled to pick items from storage containers 124. Once picked, the items are retained by the picking device or devices 602. Items which are picked are then placed in target storage containers. If these target storage containers are within the same portion of the grid from which the items have been picked, the picking device 602 may deposit the item into the target storage container. If the target storage container 124 is elsewhere on the grid of the automated storage and retrieval system, the picking system can move on the rail system 116 in order for the picking device 602 to deposit the item or items.

When handling items using a picking device 602, there is a risk that the picking device may drop the item. Should the item fall onto a track of the rail system 116, this has the potential to cause mechanical damage. In addition, a picked item may spill or drop onto the track of the rail system 116 such that track is blocked or contaminated.

The rail protection elements 606 may help to shield the tracks of the rail system 116 from items which may be dropped by the picking device 602.

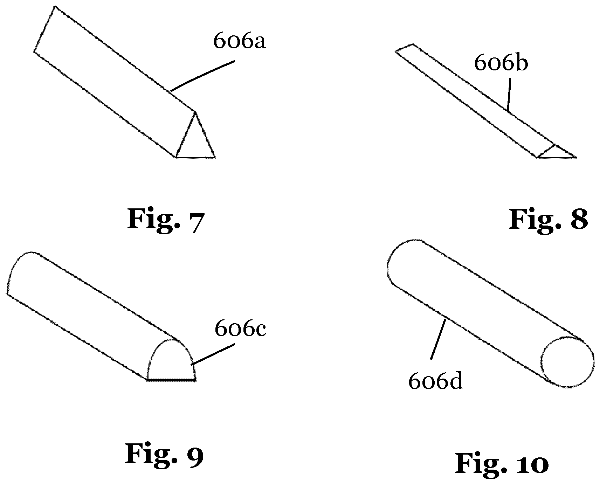

As shown in Figs. 7 to 10, different forms of rail protection element 606 may be employed. The rail protection elements 606 may comprise elongate profile members having a profile wide corresponding to or slightly larger than a profile width of the rails. Although rectangular sections could be used, in the examples, the rail protection elements 606 have a profile that widens in vertical downward direction, i.e. towards the rails. Such a form can serve to deflect falling items away from a rail. In Fig. 7 for example, a rail protection element 606a with a triangular profile is shown. Fig. 8 shows a further rail protection element 606b with a triangular profile which is shallower than that of Fig. 7. Fig. 9 shows a rail protection element 606c with a semi-circular profile and Fig. 10 shows a rail protection element 606d with a circular profile. The profile that is used may depend on the nature of goods being handled in the automated storage and retrieval system. For example, if resilient items are being handled, the triangular profiles may be suitable. Semi-circular or circular profiles may provide a smoother impact area and may be used with items prone to busting, tearing or spilling for example, if it contains a powder or liquid.

In addition to the profile form, rail protection elements with open channels may be provided. The channels may be formed as U-shaped profile sections. Should a liquid be spilled, such open channels may be used to contain the liquid.

The rail protection elements 600, 606a, 606b, 606c, 606d, may be formed of a resilient material such as metal. The rail protection elements 600, 606a, 606b, 606c, 606d may be formed or have portions of energy absorbing material, for example, foams or rubber.

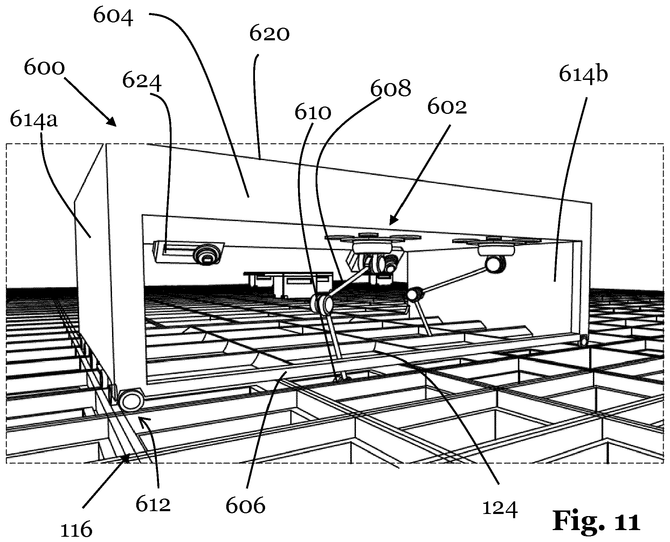

Fig. 11 shows a further example of a picking system 600 which is the same as that shown in Fig. 6, but with the addition of cameras 624 which are couplable with a control system of the automated storage and retrieval system or a monitoring system for monitoring the operation of the automated storage and retrieval system. In the example, the cameras 624 may be used to monitor and control the picking devices 602. Picking can be automated with the use of cameras using image recognition software for example. As an alternative, the cameras may allow the remote control of the picking system by a human operator.

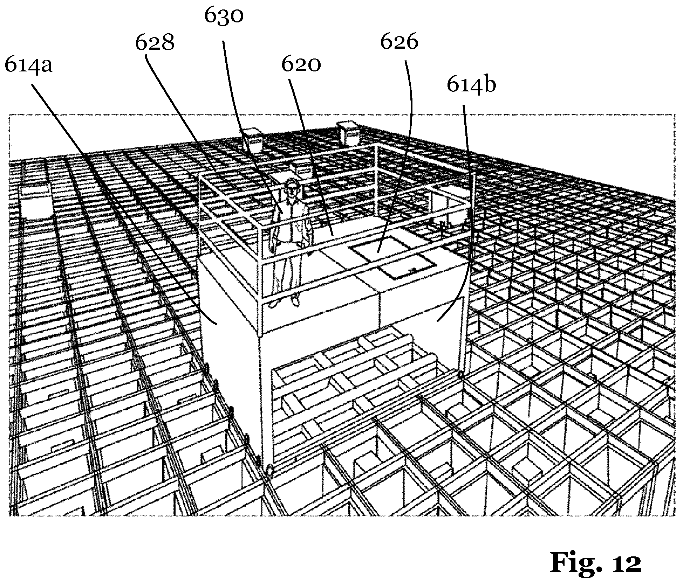

Fig. 12 shows a further example of a picking system 60o which is the same as shown in Fig. 6, but with the addition of a perimeter rail 628 atop the bridge element 620. The rail 628 provides protection to an operator standing on the bridge element for example, for maintenance. Also shown is an access hatch 626 to allow access below the bridge element 620.

In addition to picking items for orders, the picking system could be used for maintenance of the automated storage and retrieval system. For example, the picking system could be used to remove items which have inadvertently fallen onto the rail system. For such an application, the rail protection elements may not be needed so as to allow unrestricted access to the tracks. Other attachments may be used with the picking devices, for example, tools to clean or carry out maintenance services on the system in particular, but not limited to, the tracks of the rail system.

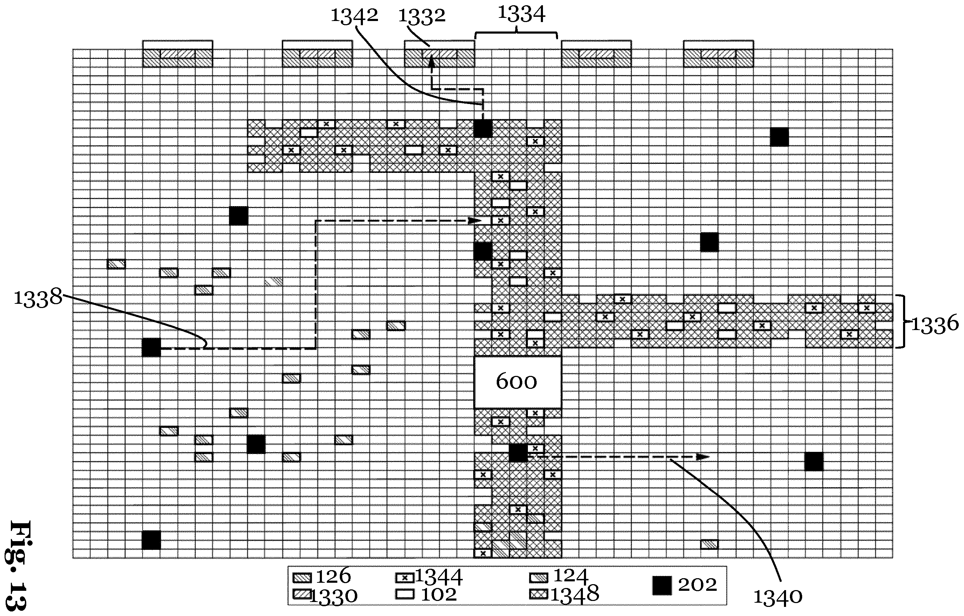

Fig. 13 facilitates understanding of a possible method of operating the picking system 600. Shown is a schematic plan view of an automated storage and retrieval system as described in relation to Figs. 1 to 4, comprising storage columns 102. Storage containers 124 are arranged within the system. Robots 202, as described in relation to Figs. 1 to 4, fetch or place storage containers 124 in which items for fulfilling orders are located. The robots 202 transport the storage containers, as represented by example route 1338, to a virtual bin or pick field 1334, 1336 which is subset or an area within which storage containers 1348 from which items for orders to be picked by the picking system 600 may be located. The storage containers 1348 within the virtual pick field 1334, 1336 may be arranged such that they form a strip which extends to the width and/ or depth of the picking system 600. This allows the picking system to move over dense areas of storage containers 1348 from which it is desired to pick items in the virtual pick field 1334, 1336 without needing to move over all the areas of the grid of the storage system.

As described in relation to Figs. 5 to 12, the picking system 600 can pick items from the storage containers 1348 within the virtual pick field 1334, 1336. Multiple items for an order can be placed in a target order storage container 1344. The target order storage container 1344 can also be placed or positioned within the virtual pick field 1334, 1336 by robots 202. This may be before picking or harvesting is carried out by the picking system 600. When ready, for example, the target order storage container 1244 has been filled with the desired items for an order, the target order storage container 1348 may be transported using robot 202 to bin ports 132 via drop off bin columns 126 along example route 1342. An operator at workstation 1332 can then manipulate the items in the delivered target storage container 1344.

When a storage container 1348 is no longer required within the virtual bin field 1334, 1336, it may be taken out of the virtual bin field by robot 202 as represented by example route 1340.

By providing the picking system 600 as described and operated, items can be picked in an efficient manner whilst protecting the rail system to avoid downtime.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A picking system (600) for picking items (601) from storage containers (112) in an automated storage and retrieval system,
the automated storage and retrieval system comprising a plurality of storage columns (102), and a rail system (116) above the storage columns (102), the rail system (116) having a first set of parallel rails (118a, 118b) arranged in a horizontal plane and extending in a first direction (X) and a second set of parallel rails (120a, 120b) arranged in the horizontal plane and extending in a second direction (Y) which is orthogonal to the first direction (X), the first and second sets of rails (118a, 118b, 120a, 120b) forming a grid pattern in the horizontal plane comprising a plurality of adjacent grid cells, each comprising a grid opening (124) corresponding with one of the storage columns (102) and being defined by a pair of neighbouring rails (118a, 118b) of the first set of rails and a pair of neighbouring rails (120a, 120b) of the second set of rails,
the picking system (600) comprising:
- a device body (604) that is configured to move above the storage columns (102),
- a picking device (602) configured to pick items from above the rail system (116) from storage containers (112) beneath grid openings (124), and
- wherein the device body (604) has a footprint that corresponds to a plurality of grid openings (124).

2. A picking system (600) according to claim 1,
wherein the device body (604) has a footprint that corresponds to a matrix of grid openings (124), the matrix having a first dimension of at least 1 and a second dimension of at least 2.

3. A picking system (600) according to claim 1 or 2, wherein the picking device (602) has a picking arm (608) carrying a picking head (610), the picking arm (608) being coupled with the device body (604) and being configured to pick items from storage containers by moving and operating the picking head (610).

4. A picking system (600) according to any of the preceding claims,
wherein the picking system (600) comprises a drive system configured to move the device body (604) in at least one of the first direction (X) and the second direction (Y) above the storage columns.

5. A picking system (600) according to any of the preceding claims,
wherein the device body (604) comprises two spaced apart, parallel and upright side wall elements (614a, 614b), and
wherein the device body (604) comprises a bridge element (620) connected atop the wall elements (614a, 614b).

6. A picking system (600) according to claim 5,
wherein the wall elements (614a, 614b) are dimensioned to not protrude in a lateral direction over a grid opening (124) beneath the device body (604).

7. A picking system (600) according to any of the preceding claims, further comprising:
rail protecting elements (606) configured to be placed above the rails (118a, 118b, 120a, 120b) to protect the rails (118a, 118b, 120a, 120b) from items falling from the picking device (602).

8. A picking system (600) according to claim 7,
wherein the rail protecting elements (606) comprise elongated profile members having a profile width (w) corresponding to a profile width of the rails.

9. A picking system (600) according to claim 7 or 8,
wherein the number and arrangement of the rail protecting elements (606) corresponds to the rails (118a, 118b, 120a, 120b) forming the grid openings (124) beneath the device body (604).

10. A picking system (600) according to any of the preceding claims,
wherein the rail protecting elements (606) have a profile that widens in a vertical, downward direction.

11. A picking system (600) according to any of the preceding claims,
wherein a camera (624) is attached to the device body (604) directed to the grid openings (124) beneath the device body (604), and
wherein the camera (624) is couplable with a control system of the automated storage and retrieval system or a monitoring system for monitoring the operation of the automated storage and retrieval system.

12. An automated storage and retrieval system, comprising:
- a framework structure (100) having a plurality of upright members (102) defining storage columns (105),
- a rail system (116) above the storage columns (102), the rail system (116) having a first set of parallel rails (118a, 118b) arranged in a horizontal plane and extending in a first direction (X) and a second set of parallel rails (120a, 120b) arranged in the horizontal plane and extending in a second direction (Y) which is orthogonal to the first direction (X), the first and second sets of rails (118a, 118b, 120a, 120b) forming a grid pattern in the horizontal plane comprising a plurality of adjacent grid cells, each comprising a grid opening (124) corresponding with one of the storage columns (102) and being defined by a pair of neighbouring rails of the first set of rails (118a, 118b) and a pair of neighbouring rails of the second set of rails (120a, 120b),
- a picking system (600) according to any of the preceding claims, and
- at least one container handling vehicle (122) configured to handle storage containers (112) stored in the storage columns (102).

13. A method for operating an automated storage and retrieval system according to claim 12, the method comprising:
- placing one or more target order storage containers (1344) within a subset (1334, 1336) of storage columns (102), the width of the subset of storage columns (102) being within the width or depth of the picking system (600); and
- placing one or more storage containers (1348) from which items are to be picked by the picking system (600) within the subset (1334, 1336) of storage containers.

14. A method according to claim 13, further comprising:
- placing the picking system (600) above the subset (1334, 1336) of storage columns (102),
- picking using the picking system (600) at least one item (601) from the one or more storage containers (1348) within the subset of storage columns (102); and
- placing using the picking system (600) the at least one item (601) into a target order storage container (1344).

15. A method according to claim 13 or 14, wherein the subset (1334, 1336) of storage columns (102) defines a virtual pick field forming one or more strips corresponding to the width and/or depth of the picking system (600).
